(19) Europäisches Patentamt
European Patent Office
Office européen des brevets

(11) Veröffentlichungsnummer: **0 363 745**
**A2**

# (12) EUROPÄISCHE PATENTANMELDUNG

(21) Anmeldenummer: **89117986.3**

(22) Anmeldetag: **28.09.89**

(51) Int. Cl.5: **C08G 73/04 , C08G 73/02 , C08G 69/48 , D21H 21/20 , B01D 39/02 , C12H 1/00**

Patentanspruch für folgenden Vertragsstaat: ES.

(30) Priorität: **14.10.88 DE 3835014**

(43) Veröffentlichungstag der Anmeldung: **18.04.90 Patentblatt 90/16**

(84) Benannte Vertragsstaaten: **CH DE ES FR GB IT LI**

(71) Anmelder: **CASSELLA Aktiengesellschaft
Hanauer Landstrasse 526
D-6000 Frankfurt am Main 61(DE)**

(72) Erfinder: **Kamutzki, Walter, Dr.
Am Bahnhof 15
D-6110 Dieburg(DE)**
Erfinder: **Keil, Karl-Heinz, Dr.
Lübecker Weg 3
D-6450 Hanau-Mittelbuchen(DE)**

(74) Vertreter: **Urbach, Hans-Georg, Dr. et al
Hanauer Landstrasse 526
D-6000 Frankfurt am Main 61(DE)**

## (54) Polybase, Verfahren zu ihrer Herstellung und ihre Verwendung.

(57) Eine wasserlösliche organische Polybase, herstellbar durch Umsetzung eines aus einer Verbindung der Formel I

$R^2$-CO-$R^1$-COOH (I)

und aus einem Polyalkylenimin bestehenden Gemischs mit einem bifunktionellem Alkylierungsmittel, wobei $R^1$ z.B. eine direkte Bindung oder einen Alkylenrest mit 1 bis 10 C-Atomen,
$R^2$ z.B einen Rest der Formel III

$H_2N-(CH_2)_u-NH-[(CH_2)_u-NH]_w-$ (III)

u die Zahl 2, 3, 4 oder 5,
w die Zahl 0, 1, 2 oder 3,
bedeuten, ist hervorragend zur Kationisierung asbestfreier Filtermaterialien geeignet.

EP 0 363 745 A2

## Polybase, Verfahren zu ihrer Herstellung und ihre Verwendung

Die Erfindung betrifft eine wasserlösliche organische Polybase, ein Verfahren zu ihrer Herstellung und ihre Verwendung zur Kationisierung von asbestfreien Filtermaterialien und zur Verbesserung der Naßfestigkeit von Papier und Pappe.

In der Technik haben sich Asbestfasern zur Abfiltration von feinen Trübstoffen aus Flüssigkeiten, wie z.B. aus technischen Produkten, Lösungen von pharmazeutischen Produkten, von wein und Bier und anderen Flüssigkeiten im Lebensmittelbereich in vielen Fällen hervorragend bewährt. Die hohe Wirksamkeit der Asbestfasern bei der Abfiltration feiner Schwebe- und Trübstoffteilchen ist vor allem auf eine positive elektrische Aufladung der Asbestfasern (positives Zeta-Potential) zurückzuführen, wodurch negativ aufgeladene Feststoffteilchen aus der zu filtrierenden Flüssigkeit elektrokinetisch abgefangen werden. Bei der Verwendung von Asbest besteht jedoch die Gefahr, daß beim Filtrationsvorgang kleine Asbestfaserteilchen aus dem Filtermaterial in die zu filtrierende Flüssigkeit gelangen, was wegen der Gesundheitsgefährlichkeit des Asbests insbesondere bei Flüssigkeiten im Lebensmittel-und Genußmittelbereich zu Bedenken Anlaß gibt. Man hat daher bereits versucht, die Asbestfasern durch andere Filtermaterialien, wie z.B. Cellulosefasern, Kieselgur, Glasfasern etc., zu ersetzen. Derartige Filtermaterialien sind bei der Filtration jedoch elektrisch negativ aufgeladen (negatives Zeta-Potential), so daß die zumeist ebenfalls negativ aufgeladenen Feststoffteilchen lediglich aufgrund rein mechanischer Siebwirkung aus der Flüssigkeit entfernt werden. Derartige Filtermaterialien erreichen deshalb die Filterleistung von Asbestfasern nicht.

Es ist bereits bekannt, die Filterleistung von asbestfreien Filtermaterialien dadurch zu verbessern, daß auf die Filtermaterialien kationische organische Polyelektrolyte aufgebracht werden. So werden nach der USP 3 352 424 auf Kieselgur, Perlit, Aktivkohle, Sand, Cellulose und Fullererde Polyalkylenimine, Polyalkylenpolyamine, tertiäre Polyvinylbenzylamine, quartäre Polyvinylbenzyl-ammoniumsalze oder Polyvinylbenzylsulfoniumpolymere aufgebracht.

In der DE-PS 24 22 426 ist beschrieben, daß die Filterleistung eines Filters aus einem negativ geladenen Filtermaterial durch Behandlung mit einem kationischen Kolloid eines Melaminformaldehydharzes verbessert werden kann. Das Filtermaterial kann dabei beispielsweise aus Glasfasern, Cellulosefasern oder einem Gemisch derartiger Fasern bestehen und gegebenenfalls auch noch Kieselgur enthalten.

In der DE-AS 15 46 369 ist ein Verfahren zum Naßfestmachen von Papier, Pappe und cellulosehaltigem Material beschrieben. Dabei wird der wäßrigen Cellulose-Fasersuspension ein Polyamid-Epichlorhydrin-Kondensat zugesetzt, das durch Polykondensation von gesättigten aliphatischen Dicarbonsäuren mit 3 bis 10 Kohlenstoffatomen und mehrwertigen Aminen der allgemeinen Formel

$NH_2-(C_nH_{2n}NH)_xH$,

in der n und x ganze Zahlen im Wert von mindestens 2 bedeuten, in einem Molverhältnis zu den Dicarbonsäuren von 0,8:1 bis 1,4:1 bei Temperaturen von 110 bis 250 °C und Umsetzung der so erhaltenen Polyamide in an sich bekannter Weise mit Epichlorhydrin bei Temperaturen von 45 bis 100 °C hergestellt worden ist. In der DE-AS 15 46 369 wird bezüglich der anzuwendenden Produkte auch auf die DE-AS 11 77 824 verwiesen. Aus dieser Literaturstelle geht hervor, daß das aus der Dicarbonsäure und dem Amin erhaltene Polyamid mit soviel Epichlorhydrin umgesetzt wird, daß für jede sekundäre Aminogruppe des Polyamids 0,5 bis 1,8 mol, vorzugsweise 1,0 bis 1,5 mol, Epichlorhydrin angewendet werden. Zur Verbesserung der Lagerstabilität wird die Umsetzung mit Epichlorhydrin in Gegenwart eines quaternisierenden Mittels, wie z.B. Dimethylsulfat, vorgenommen.

Zur Verbesserung der Naßfestigkeit von Papier sind aus der EP-A2-131 200 wasserlösliche Reaktionsprodukte aus Epihalogenhydrin und wasserlöslichen, basischen Polyamidoaminen bekannt, wobei den Polyamidoaminen z.B. Umsetzungsprodukte von aliphatischen $C_{4-10}$-Dicarbonsäuren mit aliphatischen Polyaminen, die mindestens zwei Primäre und mindestens eine weitere, und zwar sekundäre und/oder tertiäre Aminogruppe enthalten, und mit Monoalkanolaminen zugrunde liegen, wobei das Verhältnis der Summe der primären NH-Gruppen zu den Carboxylgruppen (0,8 - 1,4) : 1 und das der Molmenge von Polyaminen zu Alkanolamin (0,6 : 0,4) bis (0,99 : 0,01) beträgt.

Die aus den DE-AS 15 46 369, 11 77 824 und EP-A2-131 200 bekannten Produkte sind zur Naßfestausrüstung von Papier, Pappe und dergleichen geeignet. Bei ihrem Einsatz zur Verbesserung der Filterleistung von asbestfreien Filtermaterialien ergeben sie jedoch, wie auch andere ähnliche Produkte, keine ausreichende Verbesserung der Filterleistung. Außerdem verbleiben bei der Verwendung von Dimethylsulfat und anderen Quaternisierungsmitteln Restmengen dieser Quaternisierungsmittel in den hergestellten Pro dukten, was zu Bedenken Anlaß gibt, insbesondere wenn die behandelten Filtermaterialien im Lebensmittelbereich eingesetzt werden.

Bei Versuchen, die anionische Oberfläche von cellulosischen Filtermaterialien durch Reaktion mit

Kationisierungsreagenzien wie z.B. 3-Chlor-2-hydroxylpropyl-trimethylammoniumchlorid kationisch zu modifizieren, treten Nebenprodukte auf, die auf Grund ihres Geruchs und der zu erwartenden Toxitität die behandelte Cellulose zu Filtrationszwecken unbrauchbar machen, da zu erwarten ist, daß aus dem Filtermaterial unerwünschte Substanzen in das zu filtrierende Medium übergehen.

Beim Aufbringen von kationisierter Stärke, d.h. von Stärke, die mit reaktivem Trimethylglycidylammoniumchlorid umgesetzt worden ist, auf Cellulose treten Geruchsprobleme auf Das nicht umgesetzte Trimethylglycidylammoniumchlorid läßt sich nur sehr schwierig und nur mit aufwendigen Extraktionsverfahren soweit aus der kationisierten Stärke entfernen, daß eine geruchsfreie kationisierte Cellulose erhalten wird.

Die bei den bisherigen Behandlungsverfahren zur Verbesserung der Filtrationsleistung von asbestfreien Filtermaterialien erzielten Ergebnisse reichen nicht an die Filtrationsleistungen von Asbest heran und/oder es treten andere Nachteile auf.

Es wurde nun gefunden, daß die erfindungsgemäße wasserlösliche organische Polybase hervorragend zur Verbesserung der Filterleistung von asbestfreien Filtermaterialien geeignet ist.

Die erfindungsgemäße wasserlösliche, organische Polybase ist herstellbar durch Umsetzung eines aus 1 Gew.Teil einer oder mehrerer Verbindungen der Formel I

$R^2$-CO-$R^1$-COOH (I)

und aus 0,5 bis 1,5 Gew.Teilen eines oder mehrerer Polyalkylenimine der Formel II

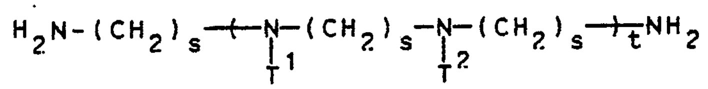 (II)

bestehenden Gemischs mit 0,01 bis 5 Gew.%, bezogen auf das Gemisch aus den Verbindungen der Formeln I und II, eines oder mehrerer bifunktioneller Alkylierungsmittel, wobei $R^1$ eine direkte Bindung, einen Alkylenrest mit 1 bis 10 C-Atomen, einen Alkenylenrest mit 2 bis 10 C-Atomen oder einen Phenylenrest,

$R^2$ einen Rest der Formel III

$H_2N-(CH_2)_u-NH-\!\!\left(-(CH_2)_u-NH-\right)_w$ (III)

oder einen Rest der Formel IV

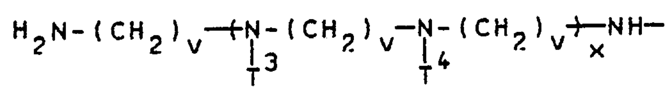 (IV),

$T^1$, $T^2$ Wasserstoff oder den Rest $\left(-(CH_2)_s-NH-\right)_y H$,

$T^3$, $T^4$ Wasserstoff oder den Rest $\left(-(CH_2)_v-NH-\right)_z H$,

s, u, v die Zahl 2, 3, 4 oder 5,

w die Zahl 0, 1, 2 oder 3,

t, x, y, z eine so große Zahl, daß die Verbindung der Formel II oder der Rest der Formel IV ein durchschnittliches Molgewicht von 2000 bis 30000 besitzen,

bedeuten.

Die bei der Herstellung der erfindungsgemäßen wasserlöslichen organischen Polybasen einzusetzenden Verbindungen der allgemeinen Formel I können ihrerseits durch Umsetzung einer oder mehrerer Dicarbonsäuren der allgemeinen Formel V

HOOC-$R^1$-COOH (V)

mit einem oder mehreren Di- oder Polyaminen der allgemeinen Formel IIIa

$H_2N-(CH_2)_u-NH-\!\!\left(-(CH_2)_u-NH-\right)_w H$ (IIIa)

und/oder einem oder mehreren Polyalkyleniminen der allgemeinen Formel IVa

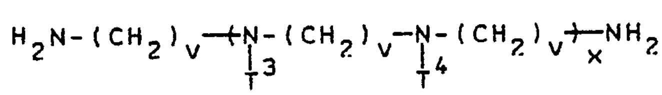 (IVa)

worin $R^1$, u, v, w, x, $T^3$ und $T^4$ die bereits genannten Bedeutungen besitzen, hergestellt werden.

Der für $R^1$ stehende Alkylen- oder Alkenylenrest kann verzweigt oder vorzugsweise geradkettig sein. Bei einem für $R^1$ stehenden Phenylenrest handelt es sich vorzugsweise um einen 1,4- oder 1,2-Phenylenrest. Geeignete Dicarbonsäuren der allgemeinen Formel V sind z.B. α,ω-Dicarbonsäuren, wie Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure, Maleinsäure, Fumarsäure, Citraconsäure, ferner Phthalsäure und Terephthalsäure.

In den Formeln III und IIIa bedeutet u vorzugsweise 2 oder 3 und w vorzugsweise 1, 2 oder 3. Bevorzugte Amine der Formel IIIa sind z.B. Diethylentriamin, Dipropylentriamin, Triethylentetramin, Tetraethylenpentamin.

Die Herstellung der einzusetzenden Verbindungen der Formel I aus den Dicarbonsäuren der Formel V und den Verbindungen IIIa und/oder IVa ist bekannt (vergl. z.B. DE-AS 15 46 369 und DE-AS 11 77 824). Sie erfolgt normalerweise durch Erhitzen der Komponenten, gegebenenfalls in wäßriger Lösung, vorzugsweise unter Inertgas, zumeist Stickstoff, auf Temperaturen von z.B. 150 bis 300 °C. Gegebenenfalls wird, wie z.B. in wäßriger Lösung, unter Überdruck erhitzt. Anschließend wird das Wasser abdestilliert. Bei der Herstellung der Verbindungen der Formel I können anstelle der Dicarbonsäuren der Formel V auch entsprechende Derivate, insbesondere die Anhydride, ganz oder zum Teil eingesetzt werden. Bei der Herstellung der Kondensationsprodukte der Formel I werden die Dicarbonsäuren der Formel V und/oder ihre Derivate, insbesondere ihre Anhydride, zusammen mit den Polyaminen der Formel IIIa und/oder dem Polyalkylenimin der Formel IVa normalerweise im Molverhältnis 1 : (0,8 bis 1,4), vorzugsweise 1:1 umgesetzt.

Polyalkylenimine der Formeln II oder IVa sind handelsüblich. Vorzugsweise werden Polyalkylenimine der Formeln II oder IVa mit einem Molekulargewicht zwischen 2000 und 20000, besonders bevorzugt zwischen 2000 und 5000, verwendet. In den Formeln II, IV und IVa bedeutet s oder v vorzugsweise die Zahl 2. In diesem Fall sind handelsübliche Vertreter der Verbindungen der Formeln II oder IVa handelsübliche Polyethylenimine. Derartige Polyethy lenimine werden durch Polymerisation von Ethylenimin hergestellt und enthalten etwa 50 bis 600 Ethylenimineinheiten und üblicherweise primäre, sekundäre und tertiäre Stickstoffatome in statistischer Verteilung in einem zahlenmäßigen Verhältnis von etwa 1:2:1.

Das bifunktionelle Alkylierungsmittel besitzt z.B. die Formel VI

$A—Z—A^1$ (VI)

worin A und $A^1$ gleiche oder verschiedene Reste der Formel $-CH_2A^2$ oder einen Epoxidrest (Oxiranrest) der Formeln VII oder VIII

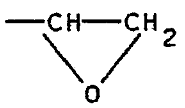

(VII)

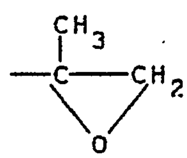

(VIII)

bedeuten. $A^2$ ist ein als Anion abspaltbarer Substituent, insbesondere Chlor, Brom oder Iod, oder eine als Anion abspaltbare Gruppe, wie z.B. Hydroxyl, ein Sulfatorest, eine Sulfonyloxygruppe, insbesondere phenylsulfonyloxy oder p-Tolylsulfonyloxy oder ein Phosphatorest, und Z steht für eine direkte Bindung oder für einen bivalenten organischen Rest.

Z kann ein aliphatischer, aromatischer oder araliphatischer Rest sein, wobei aliphatische und araliphatische Reste auch Hydroxylgruppen -OH, Ketogruppen -CO- oder Heteroatome, wie -O- oder -S-, oder Heteroatomgruppierungen, wie -SO-, $-SO_2-$, -NH-, $-N(CH_3)-$ enthalten können.

Bei besonders bevorzugten bifunktionellen Alkylierungsmitteln der Formel VI bedeutet Z eine direkte Bindung, einen Phenylenrest, insbesondere einen 1,4-Phenylenrest, oder einen Rest der Formeln $-C_nH_{2n}-$ oder $-C_nH_{2n}-G-C_mH_{2m}-$, wobei n und m eine Zahl von 1 bis 6 bedeuten und G -O-, -S-, -SO-, $-SO_2-$, -NH-, $-N(CH_3)-$, -CO-, -CHOH- oder Phenylen, insbesondere 1,4-Phenylen, bedeutet. Vorzugsweise sind m und n gleich und bedeuten vorzugsweise 1 oder 2, insbesondere 1.

Beispiele für bevorzugte bifunktionelle Alkylierungsmittel der Formel VI sind: Epichlorhydrin (= Chlormethyloxiran), Epibromhydrin, Glycidol (=2,3-Epoxy-1-propanol), 1,3-Dichloro-propan-2-ol, 2,2′-Dichlorodiethylether, 2,2′-Dichloro-diethylamin, 2,2′-Dichloro-diethylsulfid, 2,2′-Dichloro-diethylsulfoxid, 2,2′-Dichlorodiethylsulfon, 2,2′-Bis-(sulfato)-ethylether 2,2′-Bis-(Phenylsulfonyloxy)-ethylether, 2,2′-Bis-(p-tolylsulfonyloxy)ethylether, Di-epoxy-butan, Di-epoxy-2-methylbutan, Bis-glycidylamin (= Bis-(2,3-epoxy-propyl)-amin), 1,2-oder 1,4-Bis-(epoxyethyl)-benzol, 1,2- oder 1,4-Bis-(2,3-epoxy-propyl)-benzol, 1,2- oder 1,4-Bis-(chlormethyl)-benzol.

Die erfindungsgemäßen wasserlöslichen organischen Polybasen sind herstellbar durch Umsetzung

eines aus 1 Gew.Teil einer oder mehrerer Verbindungen der Formel I und aus 0,5 bis 1,5, vorzugsweise 0,75 bis 1,25, Gew.Teilen, ganz besonders bevorzugt 0,9 bis 1,1 Gew.Teilen, eines oder mehrere Polyalkylenimine der Formel II bestehenden Gemisches mit 0,01 bis 5, vorzugsweise 0,1 bis 2, ganz besonders bevorzugt 0,5 bis 1,5, Gew.%, bezogen auf das Gemisch aus den Verbindungen der Formeln I und II, eines oder mehrerer bifunktioneller Alkylierungsmittel, insbesondere solcher der Formel VI. Die Umsetzung wird zweck mäßigerweise in einem geeigneten Lösungsmittel oder in einem Gemisch geeigneter Lösungsmittel durchgeführt. Dabei ist es zweckmäßig, das Polyalkylenimin der Formel II (das auch als Gemisch verschiedener Polyalkylenimine vorliegen kann) in Form der handelsüblichen, meist 50 gew.%eigen wäßrigen Lösungen einzusetzen. Als Lösungsmittel werden vorzugsweise solche verwendet, die über den gesamten Konzentrationsbereich vollständig mit Wasser mischbar sind. Es sind dies z.B. niedere Alkanole, wie z.B. Methanol, Ethanol, n- und i-Propanol, tert-Butanol; Alkandiole, wie z.B. Ethylenglykol, Propandiol-1,2, Propandiol-1,3, Butandiol-1,4, Butandiol-2,3; Polydiole, wie Glyzerin; Ethylendi-, -tri- und -polyglykole; Glykolether, wie z.B. Diethylenglykolmonomethylether, Ethylenglykolmonomethylether oder bipolare aprotische Lösungsmittel, wie z.B. N-Methylpyrrolidon, N-Methylacetamid, N-Dimethylformamid oder Hexamethylphosphorsäuretriamid. Besonders zweckmäßig ist es, die Umsetzung in einem Gemisch aus Wasser und einem mit wasser vollständig mischbaren Lösungsmittel, insbesondere einem Alkanol und/oder Alkandiol, durchzuführen.

Es ist für die Durchführung der Umsetzung normalerweise zweckmäßig, eine wäßrige Lösung des Polyalkylenimins der Formel II zusammen mit der Verbindung der Formel I in soviel Wasser vorzulegen, daß der Feststoffgehalt der Lösung ca. 10 bis 60 Gew.%, vorzugsweise 20 bis 50 Gew.%, beträgt und zu dieser wäßrigen Lösung das in einem geeigneten, vollständig mit Wasser mischbaren Lösungsmittel gelöste bifunktionelle Alkylierungsmittel hinzuzufügen. Dies erfolgt zweckmäßigerweise durch Eintropfen und unter Rühren. Die Umsetzung wird im Temperaturbereich von 25 °C bis zum Siedepunkt der Lösung, z.B. bis 100 °C, vorzugsweise 30 bis 60 °C und ganz besonders bevorzugt 40 bis 50 °C, durchgeführt. Die Umsetzung ist normalerweise in nerhalb von 5 bis 120 min, vorzugsweise 10 bis 60 min, beendet. Nach beendeter Umsetzung wird das Reaktionsgemisch noch auf Raumtemperatur abgekühlt und vorzugsweise mit einer, zweckmäßigerweise verdünnten Säure auf einen schwach sauren pH-Wert von ca. 4,0 bis 6,5, vorzugsweise 4,5 bis 5,5, insbesondere etwa 5, eingestellt.

Zu dieser Einstellung des pH-wertes ist im Prinzip jede anorganische oder organische Säure geeignet, so z.B. Chlorwasserstoff, Bromwasserstoff, Naphthalindisulfonsäuren, insbesondere Naphthalin-1,5-disulfonsäure, Phosphor-, Salpeter-, Schwefel-, Oxal-, Milch-, Glykol-, Sorbin-, Wein-, Essig-, Salicyl-, Benzoe-, Ameisen-, Propion-, Pivalin-, Diethylessig-, Malon-, Bernstein-, Pimelin-, Fumar-, Malein-, Apfel-, Sulfamin-, Phenylpropion-, Glucon-, Ascorbin-, Nicotin-, Isonicotin-, Methansulfon-, P-Toluolsulfon-, Zitronen-oder Adipin-Säure. Auch Gemische zweier oder mehrerer Säuren können für die pH-Einstellung verwendet werden. Es werden vorzugsweise solche Säuren verwendet, die beim späteren Einsatz der Produkte als Kationisierungsmittel von Filtermaterialien günstig, insbesondere physiologisch unbedenklich sind.

Nach der Einstellung des pH-Wertes wird das Gemisch zweckmäßigerweise zur Stabilisierung des Kondensationsgrades noch 1/2 bis 7 h, vorzugsweise 3/4 bis 6 h, im Temperaturbereich von 60 bis 100 °C, insbesondere 60 bis 90 °C, vorzugsweise 70 bis 80 °C, erhitzt.

Bei der Umsetzung mit dem bifunktionellen Alkylierungsmittel findet eine Kettenvernetzung statt, wodurch sich z.B. der K-Wert, der üblicherweise in verdünnter, z.B. 1%iger Lösung gemessen wird, erhöht. Die Umsetzung mit dem bifunktionellen Alkylierungsmittel wird vorzugsweise so durchgeführt, daß sich der K-Wert, z.B. gemessen in 1%iger wäßriger Lösung bei 25 °C, um den Faktor 1,5 bis 4, vorzugsweise 1,5 bis 3, erhöht.

Bei der Reaktion mit dem bifunktionellen Alkylierungsmittel werden die vorhandenen basischen N-Atome lediglich im Molverhältnis basisches N-Atom : bifunktionellem Alkylierungsmittel = (100 bis 1000) : 1, vorzugsweise (200 bis 400) : 1, umgesetzt.

Die nach der Umsetzung mit dem bifunktionellen Alkylierungsmittel anfallenden Lösungen enthalten die erfindungsgemäße Polybase in einer Konzentration von ca. 10 bis 50 Gew.%, vorzugsweise 15 bis 35 Gew.%. Diese Lösungen können direkt für die Anwendung des Produkts, insbesondere für die Kationisierung von Filtermaterialien, eingesetzt werden. Es ist jedoch zweckmäßig, die Lösungen durch Einstellung eines schwach sauren pH-Wertes und vorzugsweise anschließendes Erhitzen in ihrem Kondensationsgrad zu stabilisieren und dadurch die Lagerstabilität der Produktlösungen zu gewährleisten.

Die erhaltenen Lösungen der erfindungsgemäßen wasserlöslichen organischen Polybasen können direkt in der erhaltenen Form oder nach Konzentrierung oder Verdünnung verwendet werden. Sie werden vorzugsweise zur Kationisierung von asbestfreien Filtermaterialien eingesetzt, die bei der Filtration normalerweise ein negatives Zeta-Potential aufweisen. Derartige asbestfreie Filtermaterialien sind z.B. Fasern aus organischen Polymeren, wie Polyacrylat, Polypropylen, ferner Aktivkohle, insbesondere jedoch Glasfasern,

Sand, Perlit, Fullererde, Glaskügelchen, Diatomeenerde (Kieselgur), ganz besonders bevorzugt Cellulosefasern. Der Durchmesser der Fasern kann etwa 20 bis etwa 1 µm und darunter betragen. Sandteilchen und Glaskügelchen können Durchmesser bis zu mehreren hundert µm besitzen. Es sind jedoch auch mikroporöse Membranen, wie sie z.B. aus Celluloseestern hergestellt werden, für eine kationisierende Behandlung mit den erfindungsgemäßen Polybasen geeignet.

Zur Kationisierung der Filtermaterialien wurden diese mit vorzugsweise wäßrigen Lösungen der Polybasen, insbesondere solchen, wie sie bei der Produktion der Polybasen anfallen, in Kontakt gebracht. Dies kann in verschiedener Weise, z.B. durch Aufsprühen, Aufwalzen, Aufpressen, zweckmäßigerweise aber durch Verrühren des Filtermaterials mit einer wäßrigen Lösung der Polybase erfolgen. Die Filtermaterialien können aber auch in Form von Filterschichten vorliegen, durch die man zur Kationisierung die Lösung der erfindungsgemäßen Polybase hindurchströmen lassen kann.

Die Konzentration und Menge der Lösung der Polybase wird bei der Kationisierung so gewählt, daß normalerweise 0,05 bis 5 Gew.%, vorzugsweise 0,1 bis 2 Gew.%, Polybase, bezogen auf Filtermaterial (fest auf fest gerechnet) zur Anwendung kommt.

Die erfindungsgemäße Polybase zieht aus der Lösung gut auf das Filtermaterial auf, dann wird das Filtermaterial von der Flüssigkeit getrennt, nachgewaschen und in geeigneter Weise getrocknet. Bei der Kationisierung von Cellulosefasern kann die Lösung der Polybase im Pulper oder an anderen Stellen zur Pulpe gegeben werden.

Die erfindungsgemäßen wasserlöslichen organischen Polybasen sind, z.B. in Form ihrer bei der Herstellung anfallenden Lösungen, auch zur Naßfestausrüstung von Papier geeignet. Diese Naßfestausrüstung erfolgt in der üblichen Weise, wobei Mengen von 0,1 bis 5 Gew.%, vorzugsweise von 0,2 bis 5 Gew.%, bezogen auf Cellulosefasern, fest auf fest gerechnet, zur Anwendung kommen. Die erfindungsgemäßen wasserlöslichen Polybasen sind, z.B. in Form ihrer bei der Herstellung anfallenden Lösungen, auch als Retentionsmittel in der Papierindustrie zur Verbesserung der Faserstoff- und Füllstoffretention geeignet.

Überraschenderweise ist es möglich, durch Behandlung von Filtermaterialien mit negativem Zeta-Potential mit den nicht quaternierten erfindungsgemäßen Polybasen eine so große Zahl an positiven Ladungen pro Gramm Filtermaterial aufzubringen und dadurch die Filterleistung des Filtermaterials erheblich zu verbessern. Die erfindungsgemäßen Polybasen sind auch bei ihrer Herstellung und Anwendung ökologisch günstig, so zeigen sie z.B. einen niedrigen AOX-Wert.

Im Rahmen der vorliegenden Erfindung können als Ausgangsverbindungen der Formel I vorzugsweise solche Kondensationsprodukte bzw. Gemische solcher Kondensationsprodukte eingesetzt werden, bei deren Herstellung die Dicarbonsäure der Formel V bis zu 70, vorzugsweise bis zu 50, Mol-% durch eine oder mehrere aliphatische Monocarbonsäuren mit 8 bis 22 C-Atomen, vorzugsweise 16 bis 20 C-Atomen, und/oder Dodecenylbernsteinsäureanhydrid ersetzt worden ist. Besonders günstige Ergebnisse werden erhalten, wenn als derartige Monocarbonsäure eine oder mehrere verzweigte aliphatische Monocarbonsäuren, insbesondere Isostearinsäure, verwendet werden. Derartige Gemische von Kondensationsprodukten, herstellbar durch Umsetzung von (0,3 + p) mol, vorzugsweise(0,5 + r) mol einer oder mehrerer Dicarbonsäuren der Formel V

$HOOC\text{-}R^1\text{-}COOH$ (V)

und/oder ihrer Derivate, insbesondere ihrer Anhydride, wobei $R^1$ eine direkte Bindung, einen Alkylenrest mit 1 bis 10 C-Atomen, einen Alkenylenrest mit 2 bis 10 C-Atomen bedeutet und (0,7 - p) mol, vorzugsweise (0,5 - r) mol einer oder mehrerer aliphatischer Monocarbonsäuren mit 8 bis 22 C-Atomen, vorzugsweise 16 bis 20 C-Atomen, und/oder Dodecenylbernsteinsäureanhydrid der Formel IX

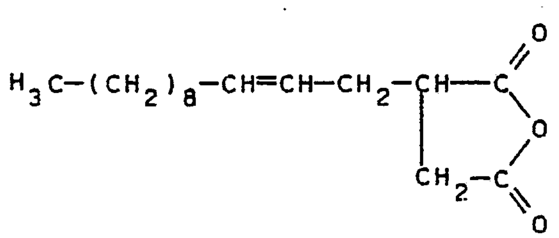

(IX)

mit 0,8 bis 1,4 mol, vorzugsweise 1 mol, eines oder mehreres Di- oder Polyamine der allgemeinen Formel IIIa

$H_2N\text{-}(CH_2)_u\text{-}NH\{(CH_2)_u\text{-}NH\}_w H$ (IIIa)

und/oder eines oder mehrerer Polyalkylenimine der allgemeinen Formel IVa

$$H_2N-(CH_2)_v-\!\!\left(\underset{T^3}{\underset{|}{N}}-(CH_2)_v-\underset{T^4}{\underset{|}{N}}-(CH_2)_v\right)_x\!\!-NH_2 \qquad (IVa),$$

worin
$T^3$, $T^4$ Wasserstoff oder den Rest $-\!\left((CH_2)_v-NH\right)_z\!-H$ u, v die Zahl 2, 3, 4 oder 5,
w die Zahl 0, 1, 2 oder 3,
x, z eine so große Zahl, daß die Verbindung der Formel IVa ein Molgewicht von 2000 bis 30000 besitzt, und
p eine Zahl von 0 bis 0,68,
r eine Zahl von 0 bis 0,48
bedeuten, sind neu. Ihre Herstellung erfolgt analog wie für die Produkte der Formel I angegeben, d.h. ein Gemisch aus (0,3 + p) mol, vorzugsweise (0,5 + r) mol einer oder mehrerer Dicarbonsäuren der Formel V und/oder ihrer Derivate, insbesondere ihrer Anhydride und (0,7 -p) mol, vorzugsweise (0,5 -r) mol, einer oder mehrerer aliphatischer Monocarbonsäuren mit 8 bis 22 C-Atomen, vorzugsweise 16 bis 20 C-Atomen und/oder Dodecenylbernsteinanhydrid, wird mit 0,8 bis 1,4 mol, vorzugsweise 1 mol, eines oder mehrerer Di- oder Polyamine der allgemeinen Formel IIIa und/oder eines oder mehrerer Polyalkylenimine der allgemeinen Formel IVa umgesetzt, wobei normalerweise die Komponenten gegebenenfalls in wäßriger Lösung und vorzugsweise unter Inertgas, zumeist Stickstoff, auf Temperaturen von z.B. 150 bis 300 °C erhitzt werden. Gegebenenfalls muß, wie z.B. in wäßriger Lösung, unter Überdruck erhitzt werden. Anschließend wird das Wasser abdestilliert. Gewünschtenfalls können die erhaltenen Kondensationsprodukte noch mit Wasser verdünnt werden. Sie können in wasserfreier Form oder in Form ihrer wäßrigen Lösungen eingesetzt werden.

Beispiele für geeignete aliphatische Monocarbonsäuren mit 8 bis 22 C-Atomen sind: Capryl-, Caprin-, Pelargon-, Laurin-, Myristin-, Palmitin-, Stearin-, Isostearin-, Arachin-, Behen-, Undecen-, öl-, Ricinolein-, Linolsäure.

In den nachfolgenden Beispielen sind angegebene Prozente Gewichtsprozente.

Beispiel 1:

In einem 2 Liter-Vierhals-Rührkolben, der mit einem Ankerrührer, Rückflußkühler, Tropftrichter und Thermometer versehen ist, werden 190 g Polyethylenimin, technische Qualität in Form einer 50%igen wäßrigen Lösung, zusammen mit 96 g des Kondensationsproduktes aus 1 mol Diethylentriamin/1 mol Adipinsäure vorgelegt, dann mit 284 g $H_2O$ dest. auf einen Gehalt von 25 % eingestellt und auf eine Innentemperatur von 40 °C geheizt. In 5 Minuten werden 3,7 g einer 30%igen ethanolischen Epichlorhydrin-Lösung zugetropft, 20 min bei 40 - 50 °C kondensiert und anschließend mit Eis/$H_2O$ auf 20 °C abgekühlt und mit 159 g Ameisensäure conc./$H_2O$ 1:1 auf einen pH-Wert von 5 eingestellt. Zur Stabilisierung des Kondensationsgrades wird drei Stunden bei 70 °C geheizt.
K-Wert (vor Vernetzung):
gemessen in 1%iger Lösung bei 25 °C $36 \cdot 10^{10}$
K-Wert (nach Kondensation):
gemessen in 1%iger Lösung bei 25 °C $72 \cdot 10^3$

Beispiel 2:

In einem 2 Liter-Vierhals-Rührkolben, der mit einem Ankerrührer, Rückflußkühler, Tropftrichter und Thermometer versehen ist, werden 380 g Polyethylenimin, technische Qualität als 50%ige wäßrige Lösung, zusammen mit 198 g des Kondensationsproduktes aus 1 mol Azelainsäure/1 mol Dipropylentriamin vorgelegt, dann mit 568 g $H_2O$ dest. auf einen Gehalt von insgesamt 25 % eingestellt und auf eine Innentemperatur von 50 °C geheizt. In 10 min werden 7,4 g einer 30%igen i-propanolischen Epichlorhydrin-Lösung zugetropft, 30 min bei 40 - 50 °C kondensiert und anschließend mit Eis/$H_2O$ auf 20 °C abgekühlt und mit 162 g Essigsäure/ $H_2O$ 1:1 auf einen pH-Wert von 5 eingestellt, und zur Stabilisierung des Kondensationsgrades 5 h bei 75 °C geheizt.
K-Wert (vor Vernetzung):
gemessen in 1%iger Lösung bei 25 °C $36 \cdot 10^3$
K-Wert (nach Vernetzung):

gemessen in 1%iger Lösung bei 25 °C 65•10³

Beispiel 3:

In einem 1 Liter-Vierhals-Rührkolben, der mit einem Ankerrührer, Rückflußkühler, Tropftrichter und Thermometer versehen ist, werden 285 g Polyethylenimin, technische Qualität als 50%ige wäßrige Lösung, zusammen mit 144 g des Kondensationsproduktes aus 103 g (1 mol) Diethylentriamin, 73 g (0,5 mol) Adipinsäure, 134 g (0,5 mol) Dodecenylbernsteinsäureanhydrid vorgelegt und anschließend mit 284 g $H_2O$ auf einen Gehalt von 40% eingestellt und anschließend auf eine Innentemperatur von 40 °C gebracht. Innerhalb von 5 min werden nun 5,5 g einer 30%igen ethanolischen Epichlorhydrin-Lösung zugetropft, 20 min bei 40 - 50 °C kondensiert, anschließend mit Eis/$H_2O$ auf 20 °C abgekühlt und mit 238,5 g Ameisensäure conc./$H_2O$ 1:1 auf einen pH-Wert von 5 eingestellt. Zur Stabilisierung des Kondensationsgrades wird 1 h bei 70 °C geheizt.
K-Wert (vor Vernetzung):
gemessen in 1%iger Lösung bei 25 °C 36•10³
K-Wert (nach Vernetzung):
gemessen in 1%iger Lösung bei 25 °C 85•10³

Beispiel 4:

In einem 2 Liter-Vierhals-Rührkolben, der mit einem Ankerrührer, Rückflußkühler, Tropftrichter und Thermometer versehen ist, werden 190 g Polyethylenimin, technischer Qualität in Form einer 50%igen wäßrigen Lösung, zusammen mit 96 g des Kondensationsproduktes aus 138,7 g (0,5 mol) Adipinsäure, 9,5 g (0,05 mol) Isostearinsäure, 103 g (1,0 mol) Diethylentriamin vorgelegt und anschließend mit 284 g $H_2O$ dest. auf 25 % eingestellt. Dann werden anschließend innerhalb von 5 min 3,7 g einer 30%igen ethanolischen Epichlorhydrin-Lösung zugetropft und 30 min bei 40 bis 50 °C kondensiert, mit Eis/$H_2O$ auf 20 °C abgekühlt und mit 245 g Eisessig/$H_2O$ 1:1 auf einen pH-Wert von 5 eingestellt. Dann wird bei 80 °C 1 h weiterkondensiert.
K-Wert (vor Vernetzung):
gemessen in 1%iger Lösung bei 25 °C 15,8•10³
K-Wert (nach Vernetzung):
gemessen in 1%iger Lösung bei 25 °C 33,4•10³

Beispiel 5

In einem 700 ml Vierhalskolben, der mit einem Ankerrührer, Thermometer und einem absteigenden Kühler mit Vorlage versehen ist, werden 36,4 g Trinkwasser zusammen mit 82,5 g (0,8 mol) Diethylentriamin vorgelegt und unter Kühlung 111,7 g (0,76 mol) Adipinsäure, 7,6 g (0,04 mol) Isostearinsäure zugegeben. Dann wird noch 3,6 g $H_2O$ zugefügt und langsam in 120 min auf eine Innentemperatur von 200 ° geheizt und 2 h kondensiert. Insgesamt werden 52,7 g $H_2O$ abdestilliert. Danach wird das Kondensationsprodukt mit destilliertem $H_2O$ auf 52 % eingestellt.

Beispiel 6

In einem 1000 ml Vierhalskolben, der mit einem Ankerrührer, Thermometer und absteigendem Kühler mit Vorlage versehen ist, werden 91 g destilliertes Wasser mit 206 g (2 mol) Diethylentriamin vorgelegt und 87,6 g (0,6 mol) Adipinsäure, 182 g $H_2O$, 268 g (1 mol) Dodecenylbernsteinsäureanhydrid, 76 g (0,4 mol) Isostearinsäure unter Kühlung zugegeben. Dann wird in 2 h auf eine Innentemperatur von 180 bis 190 °C hochgeheizt und 316,6 g $H_2O$ am absteigenden Kühler abdestilliert.

Das erhaltene Kondensationsprodukt wird auf eine 59,2 % wäßrige Lösung eingestellt.

Beispiel 7

In einem 1 l Vierhalskolben, der mit einem Ankerrührer, Thermometer, absteigendem Kühler und Vorlage versehen ist, werden 31 g $H_2O$ mit 262 g (2 mol) Dipropylentriamin vorgelegt und 146 g (1 mol) Adipinsäure, 182 g $H_2O$ und 268 g (1 mol) Dodecenylbernsteinsäureanhydrid unter Kühlung zugegeben und innerhalb von 2 h auf 200° hochgeheizt. Dann wird 2 h kondensiert und insgesamt 316,4 g $H_2O$ am absteigenden Kühler abdestilliert.

Das erhaltene Kondensationsprodukt wird mit 426,8 g $H_2O$ eingestellt.

Beispiel 8

In einem 1 l Vierhalskolben, der mit einem Ankerrührer, Thermometer, absteigendem Kühler mit Vorlage versehen ist, werden 91 g $H_2O$ mit 206 g (2 mol) Diethylentriamin vorgelegt und 146 g (1 mol) Adipinsäure, 182 g $H_2O$ und 268 g (1 mol) Dodecenylbernsteinsäureanhydrid unter Kühlung zugegeben. Dann wird innerhalb von 2 h auf 200° C Innentemperatur hochgeheizt und 2 h bei dieser Temperatur kondensiert, wobei 303 g Wasser abdestilliert werden. Anschließend wird das Reaktionsprodukt mit $H_2O$ auf 30 % eingestellt.

Beispiel 9:

Die Verbesserung der Filterleistung durch die erfindungsgemäße Polybase wird wie folgt geprüft:

Gebleichter Fichtensulfitzellstoff wird mittels eines Laborrefiners schwach angemahlen, bis ein Mahlgrad nach Schopper-Riegler von 23° SR resultiert. Mit dem so erhaltenen Stoff werden auf einem Rapid-Köthen-Blattbildner Prüfblätter mit einem Gewicht von 60g/m² gebildet. Zur Erzielung von genügend porösen Blättern für Filtrationsvorgänge werden die gebildeten Blätter nicht gegautscht. Sie werden an einem mit 100° C sattdampfbeheizten Trockenzylinder mit Filzbespannung 5 min lang getrocknet.

Auf die geschilderte Art werden hergestellt:

1) Blätter ohne Zusatz,
2) Blätter mit Zusatz von 0,5% der erfindungsgemäßen Polybase gemäß Beispiel Nr. 1
3) Blätter mit Zusatz von 0,5% eines Produkts gemäß Beispiel Nr. 1b der EP-A2-131 200.

Die Zugabe ist jeweils fest auf fest gerechnet. Von den hergestellten Filterpapieren werden Rundfilterblätter mit einem Durchmesser von 12 cm geschnitten.

Die Filterwirksamkeit der drei Papiersorten wird mit Hilfe von Aufschwemmungen von feinen Feststoffen in Wasser getestet. Als Feststoffe werden verwendet:

a) ein handelsübliches Perlit-Filtrationshilfsmittel mit einem häufigsten Teilchendurchmesser von 4 µm,

b) eine handelsübliche Kieselgurtype für Filterzwecke mit einem häufigsten Teilchendurchmesser von 6 µm,

c) eine handelsübliche Kreide für Papierstreichmassen mit einem Teilchendurchmesser, der im Mittel bei 0,7 µm liegt.

Von den Produkten a, b und c werden jeweils 1 g in 1 l enthärtetem Wasser suspendiert. Die auf 12 cm geschnittenen Rundfilter werden in eine Nutsche gelegt. Mittels Wasserstrahl-Vakuum werden jeweils 250 ml einer Suspension durchgesaugt. In der Tabelle sind die Mittelwerte der Transmissionen der einzelnen Filtrate aufgeführt. Als Bezugsgröße dient enthärtetes Wasser mit einer Transmission von 100%.

TABELLE

| Filterschicht | Transmissionswerte der Filtrate der Produkte | | |
|---|---|---|---|
| | a | b | c |
| 1 | 84,5 | 45,6 | 31,4 |
| 2 | 96,3 | 77,8 | 44,2 |
| 3 | 93,3 | 68,4 | 34,5 |

Erläuterungen:

Die Filterschichten 1, 2 und 3 sowie die Suspensionen der Produkte a, b und c sind vor der Tabelle erläutert. Die Filterschicht 1 ist unbehandelt, die Filterschicht 2 ist mit einer erfindungsgemäßen Polybase behandelt. Die Filterschicht 3 ist mit einem Mittel des Standes der Technik behandelt.

## Ansprüche

1. Wasserlösliche organische Polybase, herstellbar durch Umsetzung eines aus 1 Gew.Teil einer oder mehrerer Verbindungen der Formel I
$R^2$-CO-$R^1$-COOH (I)
und aus 0,5 bis 1,5 Gew.Teilen eines oder mehrerer Polyalkylenimine der Formel II

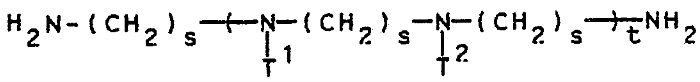 (II)

bestehenden Gemischs mit 0,01 bis 5 Gew.%, bezogen auf das Gemisch aus den Verbindungen der Formeln I und II, eines oder mehrerer bifunktioneller Alkylierungsmittel, wobei $R^1$ eine direkte Bindung, einen Alkylenrest mit 1 bis 10 C-Atomen, einen Alkenylenrest mit 2 bis 10 C-Atomen oder einen Phenylenrest,
$R^2$ einen Rest der Formel III
$H_2N-(CH_2)_u-NH\{(CH_2)_u-NH\}_w$ (III)
oder einen Rest der Formel IV

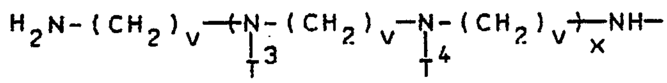 (IV),

$T^1$, $T^2$ Wasserstoff oder den Rest $\{(CH_2)_s-NH\}_y-H$,
$T^3$, $T^4$ Wasserstoff oder den Rest $\{(CH_2)_v-NH\}_z-H$,
s, u, v die Zahl 2, 3, 4 oder 5,
w die Zahl 0, 1, 2 oder 3,
t, x, y, z eine so große Zahl, daß die Verbindung der Formel II oder der Rest der Formel IV ein durchschnittliches Molgewicht von 2000 bis 30000 besitzen, bedeuten.

2. Polybase nach Anspruch 1, dadurch gekennzeichnet, daß bei ihrer Herstellung ein Gemisch aus 1 Gew.Teil einer oder mehreren Verbindungen der Formel I und aus 0,75 bis 1,25 Gew.Teilen, ganz besonders bevorzugt 0,9 bis 1,1 Gew.Teilen, einer Verbindung der Formel II eingesetzt wird.

3. Polybase nach Anspruch 1 und/oder 2, dadurch gekennzeichnet, daß bei ihrer Herstellung das Gemisch aus einer oder mehreren Verbindungen der Formel I und aus einer Verbindung der Formel II mit 0,1 bis 2 Gew.%, vorzugsweise mit 0,5 bis 1,5 Gew.%, bezogen auf das Gemisch aus den Verbindungen der Formeln I und II, eines oder mehrerer bifunktioneller Alkylierungsmittel umgesetzt wird.

4. Polybase nach einem oder mehreren der Ansprüche 1 bis 3, dadurch gekennzeichnet, daß bei ihrer Herstellung ein bifunktionelles Alkylierungsmittel der Formel VI
A—Z—$A^1$ (VI)
eingesetzt wird, wobei A und $A^1$ gleiche oder verschiedene Reste der Formel -$CH_2A^2$ oder einen Epoxidrest der Formeln

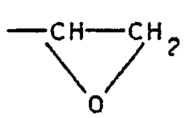
(VII)

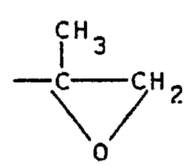
(VIII)

und $A^2$ einen als Anion abspaltbaren Substituenten, insbesondere Chlor, Brom oder Iod, oder eine als Anion abspaltbare Gruppe, insbesondere Hydroxyl, Sulfato, eine Sulfonyloxygruppe, insbesondere Phenylsulfonyloxy oder p-Tolylsulfonyloxy und Z eine direkte Bindung oder einen bivalenten organischen Rest, insbesondere einen Phenylenrest oder einen Rest der Formeln $-C_nH_{2n}-$ oder $-C_nH_{2n}-G-C_mH_{2m}-$, wobei n und m eine Zahl von 1 bis 6 und G -O-, -S-, -SO-, $-SO_2-$, -NH-, $-N(CH_3)-$, -CO-, -CHOH-oder Phenylen bedeuten.

5. Polybase nach einem oder mehreren der Ansprüche 1 bis 4, dadurch gekennzeichnet, daß die bei ihrer Herstellung verwendete Verbindung der Formel I aus einer Dicarbonsäure der Formel V

$HOOC-R^1-COOH$ (V)

und einem Di-oder Polyamin der allgemeinen Formel IIIa

$H_2N-(CH_2)_u-NH{-}\!\left[(CH_2)_u-NH\right]_w\!-H$ (IIIa)

und/oder einem Polyalkylenimin der allgemeinen Formel IVa

$$H_2N-(CH_2)_v-\left[\underset{\substack{|\\T^3}}{N}-(CH_2)_v-\underset{\substack{|\\T^4}}{N}-(CH_2)_v\right]_x-NH_2 \quad \text{(IVa)}$$

worin $R^1$, u, v, w, x, $T^3$, $T^4$ die im Anspruch 1 angegebenen Bedeutungen besitzen, hergestellt worden ist, wobei bis zu 70 mol%, vorzugsweise bis zu 50 mol%, der Dicarbonsäuren der Formel V durch eine aliphatische Monocarbonsäure mit 8 bis 22 C-Atomen, vorzugsweise 16 bis 20 C-Atomen und/oder Dodecenylbernsteinsäureanhydrid ersetzt worden ist.

6. Verfahren zur Herstellung der in einem oder mehreren der Ansprüche 1 bis 5 angegebenen wasserlöslichen organischen Polybase, dadurch gekennzeichnet, daß ein aus 1 Gew.Teil einer oder mehrerer Verbindungen der Formel I

$R^2-CO-R^1-COOH$ (I)

und aus 0,5 bis 1,5 Gew.Teilen, vorzugsweise 0,75 bis 1,25 Gew.Teilen, ganz besonders bevorzugt 0,9 bis 1,1 Gew.Teilen, eines oder mehrerer Polyalkylenimine der Formel II

$$H_2N-(CH_2)_s-\left[\underset{\substack{|\\T^1}}{N}-(CH_2)_s-\underset{\substack{|\\T^2}}{N}-(CH_2)_s\right]_t-NH_2 \quad \text{(II)}$$

bestehendes Gemisch mit 0,01 bis 5 Gew.%, vorzugsweise 0,1 bis 2 Gew.%, ganz besonders bevorzugt 0,5 bis 1,5 Gew.%, bezogen auf das Gemisch aus den Verbindungen der Formeln I und II, eines oder mehrerer bifunktioneller Alkylierungsmittel der Formel VI

$A-Z-A^1$ (VI)

wobei $R^1$ eine direkte Bindung, einen Alkylenrest mit 1 bis 10 C-Atomen, einen Alkenylenrest mit 2 bis 10 C-Atomen oder einen Phenylenrest,

$R^2$ einen Rest der Formel III

$H_2N-(CH_2)_u-NH{-}\!\left[(CH_2)_u-NH\right]_w\!-$ (III)

oder einen Rest der Formel IV

$$H_2N-(CH_2)_v-\left[\underset{\substack{|\\T^3}}{N}-(CH_2)_v-\underset{\substack{|\\T^4}}{N}-(CH_2)_v\right]_x-NH- \quad \text{(IV)},$$

$T^1$, $T^2$ Wasserstoff oder den Rest $\left[(CH_2)_s-NH\right]_y-H$,

$T^3$, $T^4$ Wasserstoff oder den Rest $\left[(CH_2)_v-NH\right]_z-H$,

s, u, v die Zahl 2, 3, 4 oder 5,

w die Zahl 0, 1, 2 oder 3,

t, x, y, z eine so große Zahl, daß die Verbindung der Formel II oder der Rest der Formel IV ein durchschnittliches Molgewicht von 2000 bis 30000 besitzen,

A und $A^1$ gleiche oder verschiedene Reste der Formel $-CH_2A^2$ oder einen Epoxidrest der Formeln

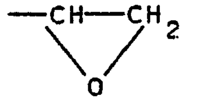

(VII)

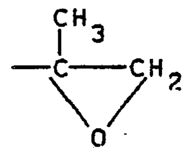

(VIII)

und $A^2$ einen als Anion abspaltbaren Substituenten, insbesondere Chlor, Brom oder Iod, oder eine als Anion abspaltbare Gruppe, insbesondere Hydroxyl, Sulfato, eine Sulfonyloxygruppe, insbesondere Phenylsulfonyloxy oder p-Tolylsulfonyloxy und

Z eine direkte Bindung oder einen bivalenten organischen Rest, insbesondere einen Phenylenrest oder einen Rest der Formeln $-C_nH_{2n}-$ oder $-C_nH_{2n}-G-C_mH_{2m}-$,

wobei n und m eine Zahl von 1 bis 6 und

G -O-, -S-, -SO-, $-SO_2-$, -NH-, $-N(CH_3)-$, -CO-, -CHOH-oder Phenylen

bedeuten, im Temperaturbereich von 25 bis 60 °C, vorzugsweise 30 bis 60 °C, ganz besonders bevorzugt 40 bis 50 °C, in einem geeigneten Lösungsmittel oder Lösungsmittelgemisch umgesetzt und gegebenenfalls anschließend der pH-Wert auf 4 bis 6,5, vorzugsweise 4,5 bis 5,5, eingestellt und danach gegebenenfalls auf 60 bis 90 °C, vorzugsweise 70 bis 80 °C, erhitzt wird.

7. Verfahren nach Anspruch 6, dadurch gekennzeichnet, daß als Verbindung der Formel I ein Kondensationsprodukt eingesetzt wird, das durch Umsetzung von (0,3 + P) mol, vorzugsweise (0,5 + r) mol, einer oder mehrerer Dicarbonsäuren der Formel V

$HOOC-R^1-COOH$ (V)

und/oder ihrer Derivate, insbesondere ihrer Anhydride und (0,7 - p) mol, vorzugsweise (0,5 - r) mol einer oder mehrerer aliphatischer Monocarbonsäuren mit 8 bis 22 C-Atomen, vorzugsweise 16 bis 20 C-Atomen, und/oder Dodecenylbernsteinsäureanhydrid der Formel IX

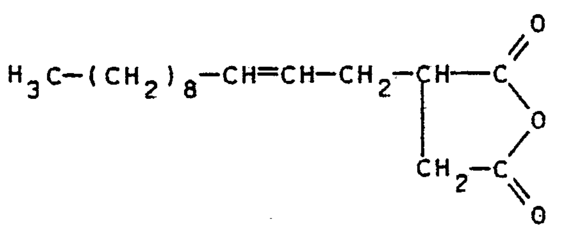

(IX)

mit 0,8 bis 1,4 mol, vorzugsweise 1 mol, eines oder mehreres Di- oder Polyamine der allgemeinen Formel IIIa

$H_2N-(CH_2)_u-NH\{(CH_2)_u-NH\}_w-H$ (IIIa)

und/oder eines oder mehrerer Polyalkylenimine der allgemeinen Formel IVa

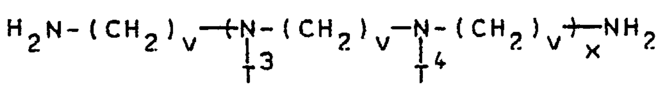

(IVa),

hergestellt worden ist, wobei

$R^1$ eine direkte Bindung, einen Alkylenrest mit 1 bis 10 C-Atomen, einen Alkenylenrest mit 2 bis 10 C-Atomen,

$T^3$, $T^4$ Wasserstoff oder den Rest $\{(CH_2)_v-NH\}_z-H$,

u, v die Zahl 2, 3, 4 oder 5,

w die Zahl 0, 1, 2 oder 3,

x, z eine so große Zahl, daß die Verbindung der Formel IVa ein Molgewicht von 2000 bis 30000 besitzt, und

p eine Zahl von 0 bis 0,68,

r eine Zahl von 0 bis 0,48

bedeuten.

8. Verfahren zur Kationisierung von asbestfreien Filtermaterialien, insbesondere aus Cellulosefasern, dadurch gekennzeichnet, daß das Filtermaterial mit einer Lösung einer Polybase nach einem oder

mehreren der Ansprüche 1 bis 5 in Kontakt gebracht wird.

9. Verfahren zur Naßfestausrüstung von Papier und Pappe aus Cellulosefasern, dadurch gekennzeichnet, daß der wäßrigen Fasersuspension eine Polybase nach einem oder mehreren der Ansprüche 1 bis 6 zugesetzt wird.

10. Kondensationsprodukt, herstellbar durch Umsetzung von (0,3 + p) mol, vorzugsweise (0,5 + r) mol einer oder mehrerer Dicarbonsäuren der Formel V

$HOOC-R^1-COOH$ (V)

und/oder ihrer Derivate, insbesondere ihrer Anhydride und (0,7 -p) mol, vorzugsweise (0,5 - r) mol, einer oder mehrerer aliphatischer Monocarbonsäuren mit 8 bis 22 C-Atomen, vorzugsweise 16 bis 20 C-Atomen, und/oder Dodecenylbernsteinsäureanhydrid der Formel IX

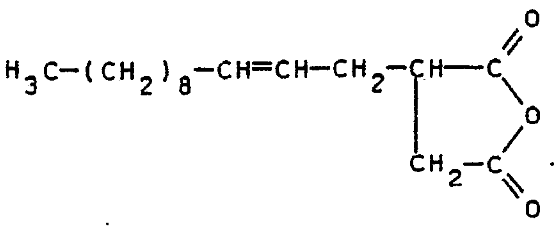

(IX)

mit 0,8 bis 1,4 mol, vorzugsweise 1 mol, eines oder mehreres Di-oder Polyamine der allgemeinen Formel IIIa

$H_2N-(CH_2)_u-NH{+}(CH_2)_u-NH{+}_w H$ IIIa)

und/oder eines oder mehrerer Polyalkylenimine der allgemeinen Formel IVa

$$H_2N-(CH_2)_v-[N(T^3)-(CH_2)_v-N(T^4)-(CH_2)_v]_x-NH_2 \quad (IVa),$$

worin

$R^1$ eine direkte Bindung, einen Alkylenrest mit 1 bis 10 C-Atomen, einen Alkenylenrest mit 2 bis 10 C-Atomen bedeutet, $T^3$, $T^4$ Wasserstoff oder den Rest $-[(CH_2)_v-NH]_z-H$,

u, v die Zahl 2, 3, 4 oder 5,

w die Zahl 0, 1, 2 oder 3,

x, z eine so große Zahl, daß die Verbindung der Formel IVa ein Molgewicht von 2000 bis 30000 besitzt, und

p eine Zahl von 0 bis 0,68,

r eine Zahl von 0 bis 0,48

bedeuten.

Patentansprüche für folgenden Vertragsstaat: ES

1. Verfahren zur Herstellung einer wasserlöslichen organischen Polybase, dadurch gekennzeichnet, daß ein aus 1 Gew.Teil einer oder mehrerer Verbindungen der Formel I

$R^2-CO-R^1-COOH$ (I)

und aus 0,5 bis 1,5 Gew.Teilen eines oder mehrerer Polyalkylenimine der Formel II

$$H_2N-(CH_2)_s-[N(T^1)-(CH_2)_s-N(T^2)-(CH_2)_s]_t-NH_2 \quad (II)$$

bestehendes Gemisch mit 0,01 bis 5 Gew.%, bezogen auf das Gemisch aus den Verbindungen der Formeln I und II, eines oder mehrerer bifunktioneller Alkylierungsmittel umgesetzt wird, wobei $R^1$ eine direkte Bindung, einen Alkylenrest mit 1 bis 10 C-Atomen, einen Alkenylenrest mit 2 bis 10 C-Atomen oder einen Phenylenrest, $R^2$ einen Rest der Formel III

$H_2N-(CH_2)_u-NH{+}(CH_2)_u-NH{+}_w$ (III)

oder einen Rest der Formel IV

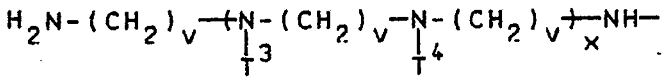 (IV),

$T^1$, $T^2$ Wasserstoff oder den Rest $-\!\!(-(CH_2)_s-NH-)_y\!\!- H$,
$T^3$, $T^4$ Wasserstoff oder den Rest $-\!\!(-(CH_2)_v-NH-)_z\!\!- H$,
s, u, v die Zahl 2, 3, 4 oder 5,
w die Zahl 0, 1, 2 oder 3,
t, x, y, z eine so große Zahl, daß die Verbindung der Formel II oder der Rest der Formel IV ein durchschnittliches Molgewicht von 2000 bis 30000 besitzen, bedeuten.

2. Verfahren nach Anspruch 1, dadurch gekennzeichnet, daß ein Gemisch aus 1 Gew.Teil einer oder mehreren Verbindungen der Formel I und aus 0,75 bis 1,25 Gew.Teilen, ganz besonders bevorzugt 0,9 bis 1,1 Gew.Teilen, einer Verbindung der Formel II umgesetzt wird.

3. Verfahren nach Anspruch 1 und/oder 2, dadurch gekennzeichnet, daß ein Gemisch aus einer oder mehreren Verbindungen der Formel I und aus einer Verbindung der Formel II mit 0,1 bis 2 Gew.%, vorzugsweise mit 0,5 bis 1,5 Gew.%, bezogen auf das Gemisch aus den Verbindungen der Formeln I und II, eines oder mehrerer bifunktioneller Alkylierungsmittel umgesetzt wird.

4. Verfahren nach einem oder mehreren der Ansprüche 1 bis 3, dadurch gekennzeichnet, daß ein bifunktionelles Alkylierungsmittel der Formel VI
$A-Z-A^1$ (VI)
eingesetzt wird, wobei A und $A^1$ gleiche oder verschiedene Reste der Formel $-CH_2A^2$ oder einen Epoxidrest der Formeln

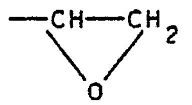 (VII) 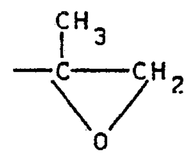 (VIII)

und $A^2$ einen als Anion abspaltbaren Substituenten, insbesondere Chlor, Brom oder Iod, oder eine als Anion abspaltbare Gruppe, insbesondere Hydroxyl, Sulfato, eine Sulfonyloxygruppe, insbesondere Phenylsulfonyloxy oder p-Tolylsulfonyloxy und Z eine direkte Bindung oder einen bivalenten organischen Rest, insbesondere einen Phenylenrest oder einen Rest der Formeln $-C_nH_{2n}-$ oder $-C_nH_{2n}-G-C_mH_{2m}-$, wobei n und m eine Zahl von 1 bis 6 und G -O-, -S-, -SO-, $-SO_2-$, -NH-, $-N(CH_3)-$, -CO-, -CHOH-oder Phenylen bedeuten.

5. Verfahren nach einem oder mehreren der Ansprüche 1 bis 4, dadurch gekennzeichnet, daß als Verbindung der Formel I eine aus einer Dicarbonsäure der Formel V
$HOOC-R^1-COOH$ (V)
und einem Di-oder Polyamin der allgemeinen Formel IIIa
$H_2N-(CH_2)_u-NH-\!\!(-(CH_2)_u-NH-)_w\!\!- H$ (IIIa)
und/oder einem Polyalkylenimin der allgemeinen Formel IVa

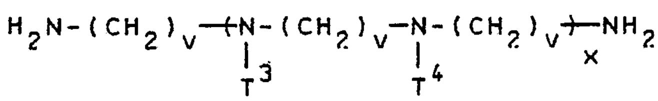 (IVa)

worin $R^1$, u, v, w, x, $T^3$, $T^4$ die im Anspruch 1 angegebenen Bedeutungen besitzen, hergestellte Verbindung umgesetzt wird, wobei bis zu 70 mol%, vorzugsweise bis zu 50 mol%, der Dicarbonsäuren der Formel V durch eine aliphatische Monocarbonsäure mit 8 bis 22 C-Atomen, vorzugsweise 16 bis 20 C-Atomen und/oder Dodecenylbernsteinsäureanhydrid ersetzt worden waren.

6. Verfahren nach einem oder mehreren der Ansprüche 1 bis 5, dadurch gekennzeichnet, daß ein aus 1 Gew.Teil einer oder mehrerer Verbindungen der Formel I
$R^2-CO-R^1-COOH$ (I)
und aus 0,5 bis 1,5 Gew.Teilen, vorzugsweise 0,75 bis 1,25 Gew.Teilen, ganz besonders bevorzugt 0,9 bis 1,1 Gew.Teilen, eines oder mehrerer Polyalkylenimine der Formel II

$$H_2N-(CH_2)_s-\!\left[-N(T^1)-(CH_2)_s-N(T^2)-(CH_2)_s-\right]_t\!-NH_2 \qquad (II)$$

bestehendes Gemisch mit 0,01 bis 5 Gew.%, vorzugsweise 0,1 bis 2 Gew.%, ganz besonders bevorzugt 0,5 bis 1,5 Gew.%, bezogen auf das Gemisch aus den Verbindungen der Formeln I und II, eines oder mehrerer bifunktioneller Alkylierungsmittel der Formel VI

$A-Z-A^1$ (VI)

wobei $R^1$ eine direkte Bindung, einen Alkylenrest mit 1 bis 10 C-Atomen, einen Alkenylenrest mit 2 bis 10 C-Atomen oder einen Phenylenrest,

$R^2$ einen Rest der Formel III

$H_2N-(CH_2)_u-NH\!\left[(CH_2)_u-NH\right]_w$ (III)

oder einen Rest der Formel IV

$$H_2N-(CH_2)_v-\!\left[-N(T^3)-(CH_2)_v-N(T^4)-(CH_2)_v-\right]_x\!-NH- \qquad (IV),$$

$T^1$, $T^2$ Wasserstoff oder den Rest $\left[(CH_2)_s-NH\right]_y H$,

$T^3$, $T^4$ Wasserstoff oder den Rest $\left[(CH_2)_v-NH\right]_z H$,

s, u, v die Zahl 2, 3, 4 oder 5,

w die Zahl 0, 1, 2 oder 3,

t, x, y, z eine so große Zahl, daß die Verbindung der Formel II oder der Rest der Formel IV ein durchschnittliches Molgewicht von 2000 bis 30000 besitzen,

A und $A^1$ gleiche oder verschiedene Reste der Formel $-CH_2A^2$ oder einen Epoxidrest der Formeln

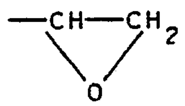
(VII)

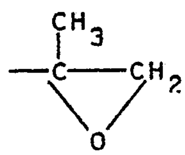
(VIII)

und $A^2$ einen als Anion abspaltbaren Substituenten, insbesondere Chlor, Brom oder Iod, oder eine als Anion abspaltbare Gruppe, insbesondere Hydroxyl, Sulfato, eine Sulfonyloxygruppe, insbesondere Phenylsulfonyloxy oder p-Tolylsulfonyloxy und

Z eine direkte Bindung oder einen bivalenten organischen Rest, insbesondere einen Phenylenrest oder einen Rest der Formeln $-C_nH_{2n}-$ oder $-C_nH_{2n}-G-C_mH_{2m}-$,

wobei n und m eine Zahl von 1 bis 6 und

G -O-, -S-, -SO-, $-SO_2-$, -NH-, $-N(CH_3)-$, -CO-, -CHOH-oder Phenylen

bedeuten, im Temperaturbereich von 25 bis 60 °C, vorzugsweise 30 bis 60 °C, ganz besonders bevorzugt 40 bis 50 °C, in einem geeigneten Lösungsmittel oder Lösungsmittelgemisch umgesetzt und gegebenenfalls anschließend der pH-Wert auf 4 bis 6,5, vorzugsweise 4,5 bis 5,5, eingestellt und danach gegebenenfalls auf 60 bis 90 °C, vorzugsweise 70 bis 80 °C, erhitzt wird.

7. Verfahren nach einem oder mehreren der Ansprüche 1 bis 6, dadurch gekennzeichnet, daß als Verbindung der Formel I ein Kondensationsprodukt eingesetzt wird, das durch Umsetzung von (0,3 + p) mol, vorzugsweise (0,5 + r) mol, einer oder mehrerer Dicarbonsäuren der Formel V

$HOOC-R^1-COOH$ (V)

und/oder ihrer Derivate, insbesondere ihrer Anhydride und (0,7 - p) mol, vorzugsweise (0,5 - r) mol einer oder mehrerer aliphatischer Monocarbonsäuren mit 8 bis 22 C-Atomen, vorzugsweise 16 bis 20 C-Atomen, und/oder Dodecenylbernsteinsäureanhydrid der Formel IX

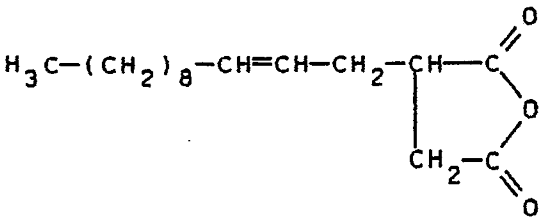

(IX)

mit 0,8 bis 1,4 mol, vorzugsweise 1 mol, eines oder mehreres Di- oder Polyamine der allgemeinen Formel IIIa

$H_2N-(CH_2)_u-NH-[(CH_2)_u-NH]_w-H$ (IIIa)

und/oder eines oder mehrerer Polyalkylenimine der allgemeinen Formel IVa

$$H_2N-(CH_2)_v-[\underset{T^3}{N}-(CH_2)_v-\underset{T^4}{N}-(CH_2)_v]_x-NH_2 \quad \text{(IVa)},$$

hergestellt worden ist, wobei

$R^1$ eine direkte Bindung, einen Alkylenrest mit 1 bis 10 C-Atomen, einen Alkenylenrest mit 2 bis 10 C-Atomen,

$T^3$, $T^4$ Wasserstoff oder den Rest $-[(CH_2)_v-NH]_z-H$,

u, v die Zahl 2, 3, 4 oder 5,

w die Zahl 0, 1, 2 oder 3,

x, z eine so große Zahl, daß die Verbindung der Formel IVa ein Molgewicht von 2000 bis 30000 besitzt, und

p eine Zahl von 0 bis 0,68,

r eine Zahl von 0 bis 0,48

bedeuten.

8. Verfahren zur Kationisierung von asbestfreien Filtermaterialien, insbesondere aus Cellulosefasern, dadurch gekennzeichnet, daß das Filtermaterial mit einer Lösung einer Polybase nach einem oder mehreren der Ansprüche 1 bis 5 in Kontakt gebracht wird.

9. Verfahren zur Naßfestausrüstung von Papier und Pappe aus Cellulosefasern, dadurch gekennzeichnet, daß der wäßrigen Fasersuspension eine Polybase nach einem oder mehreren der Ansprüche 1 bis 6 zugesetzt wird.

10. Verfahren zur Herstellung eines Kondensationsprodukts, dadurch gekennzeichnet, daß (0,3 + p) mol, vorzugsweise (0,5 + r) mol einer oder mehrerer Dicarbonsäuren der Formel V

$HOOC-R^1-COOH$ (V)

und/oder ihrer Derivate, insbesondere ihrer Anhydride und (0,7 -p) mol, vorzugsweise (0,5 - r) mol, einer oder mehrerer aliphatischer Monocarbonsäuren mit 8 bis 22 C-Atomen, vorzugsweise 16 bis 20 C-Atomen, und/oder Dodecenylbernsteinsäureanhydrid der Formel IX

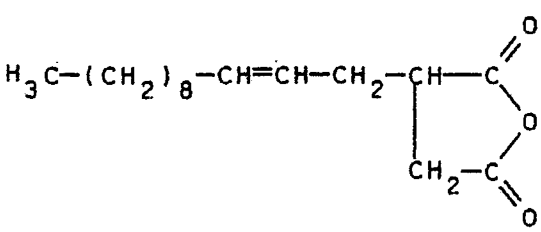

(IX)

mit 0,8 bis 1,4 mol, vorzugsweise 1 mol, eines oder mehreres Di-oder Polyamine der allgemeinen Formel IIIa

$H_2N-(CH_2)_u-NH-[(CH_2)_u-NH]_w-H$ (IIIa)

und/oder eines oder mehrerer Polyalkylenimine der allgemeinen Formel IVa

$$H_2N-(CH_2)_v-\!\!\left[N(T^3)-(CH_2)_v-N(T^4)-(CH_2)_v\right]_x\!\!-NH_2 \quad (IVa),$$

umgesetzt werden,
worin
$R^1$ eine direkte Bindung, einen Alkylenrest mit 1 bis 10 C-Atomen, einen Alkenylenrest mit 2 bis 10 C-Atomen bedeutet, $T^3$, $T^4$ Wasserstoff oder den Rest $\left[(CH_2)_v-NH\right]_z H$,
u, v
die Zahl 2, 3, 4 oder 5,
w
die Zahl 0, 1, 2 oder 3,
x, z eine so große Zahl, daß die Verbindung der Formel IVa ein Molgewicht von 2000 bis 30000 besitzt, und
P eine Zahl von 0 bis 0,68,
r eine Zahl von 0 bis 0,48
bedeuten.